(19) Europäisches Patentamt

European Patent Office

Office européen des brevets

(11) **EP 2 131 328 A2**

(12) **EUROPEAN PATENT APPLICATION**

(43) Date of publication:
**09.12.2009 Bulletin 2009/50**

(51) Int Cl.:
***G06T 7/20*** (2006.01)

(21) Application number: **09161769.6**

(22) Date of filing: **03.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.06.2008 US 58234 P**
**28.05.2009 US 473580**

(71) Applicant: **Siemens Corporate Research, INC.**
**Princeton, NJ 08540 (US)**

(72) Inventors:
• **Ramesh, Visvanathan**
**Plainsboro New Jersey 08536 (US)**
• **Tsin, Yanghai**
**Plainsboro New Jersey 08536 (US)**
• **Parameswaran, Vasudev**
**Dayton New Jersey 08810 (US)**

(74) Representative: **Clarke, Alison Clare**
**Haseltine Lake LLP**
**Redcliff Quay**
**120 Redcliff Street**
**Bristol BS1 6HU (GB)**

(54) **Method for automatic detection and tracking of multiple objects**

(57)    A method for automatically detecting and tracking objects in a scene. The method acquires video frames from a video camera; extracts discriminative features from the video frames; detects changes in the extracted features using background subtraction to produce a change map; uses the change map to use a hypothesis to estimate of an approximate number of people along with uncertainty in user specified locations; and using the estimate, track people and update the hypotheses for a refinement of the estimation of people count and location.

FIG. 1

**Description**

**CROSS-REFERENCE TO RELATED APPLICATIONS**

This application claims priority from U.S. Provisional application No. 61/058,234 filed June 3, 2008, the entire subject matter thereof being incorporated herein by reference and from U.S. Provisional application No 61/107,707 filed October 23, 2008 the entire subject matter thereof being incorporated herein by reference.

**TECHNICAL FIELD**

This invention relates generally to methods for automatically detecting and tracking multiple objects and more particularly to methods for automatically detection and tracking pedestrians in crowds.-

**BACKGROUND AND SUMMARY**

As is known in the art, multi-object detection and tracking, such as detection and tracking of pedestrians in a crowd, over extended periods of time is a challenging problem that has attracted significant attention in the context of video surveillance systems. The main technical challenges are in building practical and scalable systems whose computational complexity scales with the complexities in tracking due to the number of people, inter-object occlusions, appearance and shape/size similarities in persons (including similar geometry, clothing, and homogeneity in person facial appearance). See for example. US Patent No. 7,006,950, inventors Greiffenhagen, et al. issued February 28, 2006 entitled "Statistical modeling and performance characterization of a real-time dual camera surveillance system ".

In accordance with the invention, a method is provided for automatic detection and tracking of people in a crowd from single or multiple video streams. In one embodiment, the method uses an electronic computing apparatus to process video signals using human-like reasoning approach involving staged computation of approximate guessing (indexing) and refinement of hypotheses about the number of persons, their locations and direction of motion. A final optimization stage refines the hypotheses generated to compute a quantitative estimate of the number of persons, their locations, their tracks, along with specific attributes of the persons (including size, height, dynamic state or posture in 3-dimensions).

In one embodiment, a method is provided for automatically detecting and tracking each one of a plurality of people in a scene. The method includes: acquiring video frames from a video camera; extracting discriminative features distinguishing foreground from background in the acquired video frames; detecting changes in the extracted features to produce a change map; using the change map to generate a hypothesis for estimating an approximate number of people along with locations of the people uncertainties therein; and using the estimates, initializing tracking each one of the people to obtain partial tracks of each one of the people and using partial tracks to refine the estimate of the number of people, their individual locations and uncertainties.

In one embodiment, the generation of the hypothesis includes: (a) using the change map and/or the video frames to identify smaller hypotheses regions in the scene for further examination; (b) computing a summed-weighted score of occupancy of the identified smaller hypotheses regions; (c) using the score of occupancy to guess the number of people; (d) using contours for a plurality of identified smaller hypotheses regions to estimate another guess of the number of people and their locations for each smaller hypotheses regions; and (e) using an appearance based classifier that uses a plurality of appearance features integrated with a rule-based reasoning method to estimate number of people and their locations

In one embodiment, a method is provided for automatically detecting and tracking of each one of a plurality of people in a scene. The method includes: obtaining video data of the objects in the scene using a video system; processing the data in computer apparatus using a indexing process to generate estimate hypotheses of the location and attributes of the objects within the scene; using person track estimates from past frames to predict a likely locations of persons; using the estimated hypotheses as input to construct space-time features used to detect self and mutual occlusion hypotheses; using the occlusion hypotheses to initialize a plurality of mean-shift trackers whose histogram feature representation is chosen adaptively to discriminate between the given person and the rest of the scene and whose kernels are adaptively set according to the occlusion hypotheses and posture predictions; obtaining a plurality of partial tracks using the plurality of mean-shift trackers that are robust under occlusions; and fusing the partial tracks along with person location predictions to obtain a refined estimate of number of people, their locations and postures.

In one embodiment, a method is provided for automatically detecting and tracking objects in a scene. The method includes obtaining video data of the objects in the scene using a video system. The data is processed in computer apparatus using a fast-indexing process to generate estimate hypotheses of the location and attributes of the objects within the scene. The estimate hypothesis is refined to generate statistical models of appearance and geometry of the objects being tracked. The generated models are then used for discriminative tracking using context driven adaptive detection and tracking processing.

In one embodiment, the uncertainty estimates are used to derive predictive distributions of expected locations of persons and enable the derivation of an occlusion hypothesis that is fed back for adaptive decisions on feature.

In one embodiment, the method: acquires video frames from a video camera; extracts discriminative features, e.g., histograms computed from the most discriminative color spaces, from the video frames; detects changes in the extracted features using background subtraction to produce a change map; using the change map to use a hypothesis to estimate of an approximate number of people along with uncertainty in user specified locations; and using the estimate, track people and update the hypotheses for a refinement of the estimation of people count and location.

The details of one or more embodiments of the invention are set forth in the accompanying drawings and the description below. Other features, objects, and advantages of the invention will be apparent from the description and drawings, and from the claims.

## DESCRIPTION OF DRAWINGS

FIG. 1 is a flowchart of the method used to automatically detecting and tracking objects in a scene according to the invention;

FIG. 2 is a diagram of a system according to an embodiment of the present disclosure;

FIG. 3 is an illustration of steps in the formal design mechanism according to the invention;

FIG. 4 shows Human-like Detection & Tracking System according to the invention;

FIG. 5 illustration the pedestrian detection and tracking strategy according to the invention; and

FIG. 6 shows from input image to Fourier Descriptor (a) input image (b) foreground blob (c) sampling points on the boundary (d) magnitudes of Fourier Descriptor (e) reconstructed shape from 14 Fourier coefficients; and

FIG. 7 is a flowchart of fast indexing used in the process used to automatically detecting and tracking objects in a scene according to the invention.

Like reference symbols in the various drawings indicate like elements.

## DETAILED DESCRIPTION

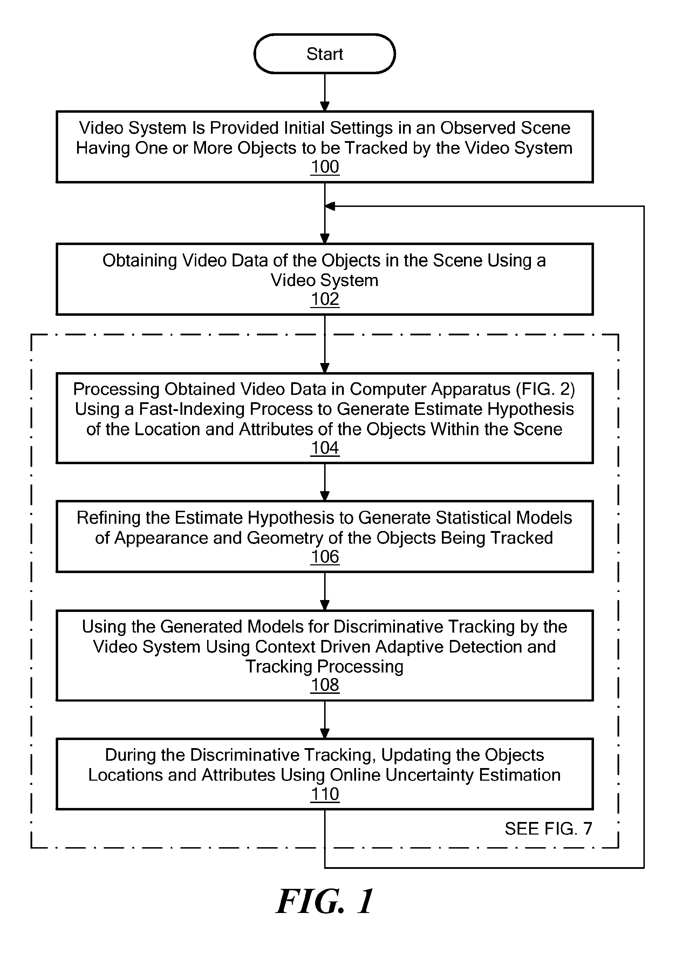

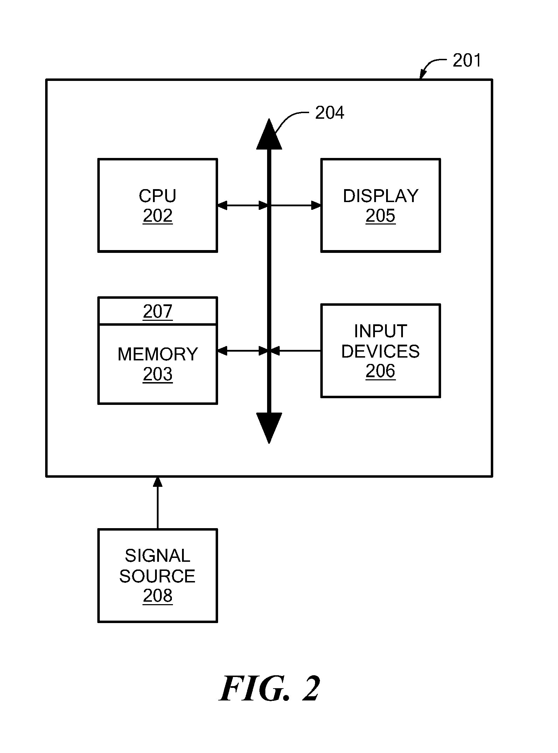

Referring now to FIG. 1, a flowchart of the method for automatically detecting and tracking objects in a scene is shown. The method includes providing a video system with initial settings in an observed scene having one or more objects to be tracked by the video system, Step 100. The method obtains video data of the objects in the scene using a video system (e.g., video camera), Step 102. The data is processed in computer apparatus (FIG. 2) using a fast-indexing process to generate estimate hypotheses of the location and attributes of the objects within the scene, Step 104. The estimate hypothesis is refined to generate statistical models of appearance and geometry of the objects being tracked, Step 106. The generated models are then used for discriminative tracking by the video system using context driven adaptive detection and tracking processing 108. During the discriminative tracking, the objects location and attributes are updated using online uncertainty estimation 110.

Referring to FIG. 2, according to an embodiment of the present invention, a computer system 201 for implementing the present invention can comprise, inter alia, a central processing unit (CPU) 202, a memory 203 and an input/output (I/O) interface 204. The computer system 201 is generally coupled through the I/O interface 204 to a display 205 and various input devices 206 such as a mouse and keyboard. The support circuits can include circuits such as cache, power supplies, clock circuits, and a communications bus. The memory 203 can include random access memory (RAM), read only memory (ROM), disk drive, tape drive, etc., or a combination thereof. The present invention can be implemented as a routine 207 that is stored in memory 203 and executed by the CPU 202 to process the signal from the signal source 208, here a video camera. As such, the computer system 201 is a general purpose computer system that becomes a specific purpose computer system when executing the routine 207 of the present invention.

The computer platform 201 also includes an operating system and micro instruction code. The various processes and functions described herein may either be part of the micro instruction code or part of the application program (or a combination thereof) which is executed via the operating system. In addition, various other peripheral devices may be connected to the computer platform such as an additional data storage device and a printing device.

It is to be further understood that, because some of the constituent system components and method steps depicted in the accompanying figures may be implemented in software, the actual connections between the system components (or the process steps) may differ depending upon the manner in which the present invention is programmed. Given the teachings of the present invention provided herein, one of ordinary skill in the related art will be able to contemplate these and similar implementations or configurations of the present invention.

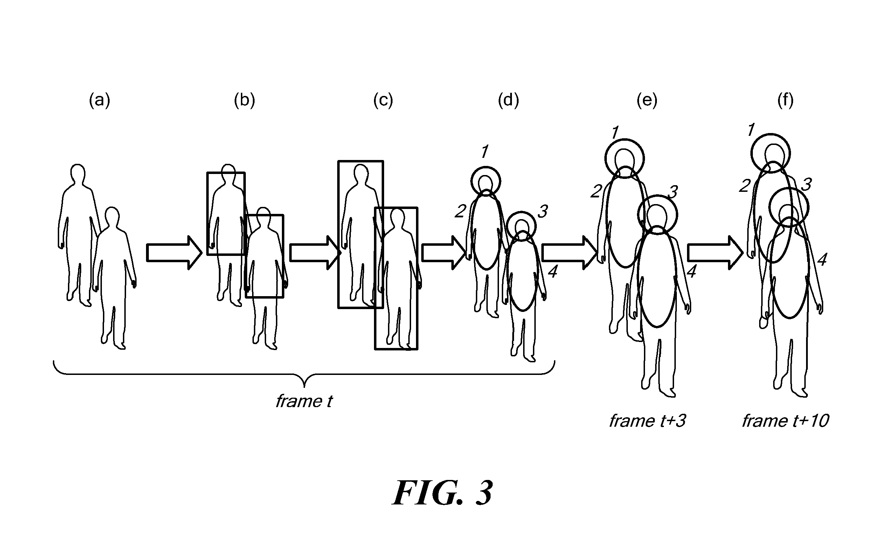

Referring now to FIG. 3, the real-time computer vision tasks can be decomposed into stages involving "indexing" (- Step 104 FIG. 1 that involves quick hypothesis generation modules that are designed by use of the regularities in the context) followed by detailed estimation (- Step 106 FIG. 1 that involves the computation or refinement of the guesses that were made by the indexing step 104). The steps 104, 106 of the design mechanism are illustrated as an example in FIG. 3. At frame t, two people with slight mutual occlusion enter the camera field of view (Step (a)). Note that we define *mutual occlusion* as occlusion caused by another people or a static structure in the environment, *e.g.*, occlusion induced by a tree closer to the camera than a pedestrian, while *self occlusion* means occlusion of body parts of a person caused by other body parts of the same person, e.g., partially invisible torso of a person due to a swaying arm of the same person. Using scene geometry and camera calibration (prior knowledge on the scene, Step 100, FIG. 1), pedestrian templates at that portion of the image are retrieved from a database. Using these human templates, a quick indexing method [see L. Dong, V. Parameswaran, V. Ramesh, I. Zoghlami: Fast Crowd Segmentation Using Shape Indexing, ICCV 2007] is called upon and initial hypotheses regarding the number of people in the scene and their rough locations are generated (Step (b)). These initial hypotheses are refined by optimizing a criterion [see L. Dong, V. Parameswaran, V. Ramesh, I. Zoghlami: Fast Crowd Segmentation Using Shape Indexing, ICCV 2007] and accurate positions are estimated (Step (c)). Multiple-kernel trackers [see V. Parameswaran, V. Ramesh, I. Zoghlami: Tunable Kernels for Tracking. CVPR (2) 2006: 2179-2186] are initialized to track the two people (Step (d)). Each person is tracked by a combination of two kernels, one for tracking the head and one for tracking the torso. After frame t, the states regarding the scene (i.e., herein referred to as the "world state"), *e.g.*, number of tracked people, their speeds and locations, are updated. Using the current "world state", the best tracking strategies are computed. Two examples of such strategies are presented in FIG. 3). After frame t, the system realizes that the two pedestrians have very similar colors and shapes in the given input image resolution. To track them, the video camera needs to zoom into the pedestrians. Using scene priors and camera characteristics, such a zoom factor can be optimally estimated [see M. Greiffenhagen, V. Ramesh, D. Comaniciu, H. Niemann: Statistical Modeling and Performance Characterization of a Real-Time Dual Camera Surveillance System. CVPR 2000: 2335-2342]. As a result, the vision system actively controls the video capturing cameras and at frame t+3, the two pedestrians appear larger with more discriminative features on them (Step (e). 2) Using motion parameters estimated for the two persons, the system predicts that the torso of one person will be occluded by another person at frame t+10. As a result, the system can lower the weight for the torso kernel (kernel 2) and reduce its influence in the tracking algorithm. This strategy can effectively reduce tracking failures.

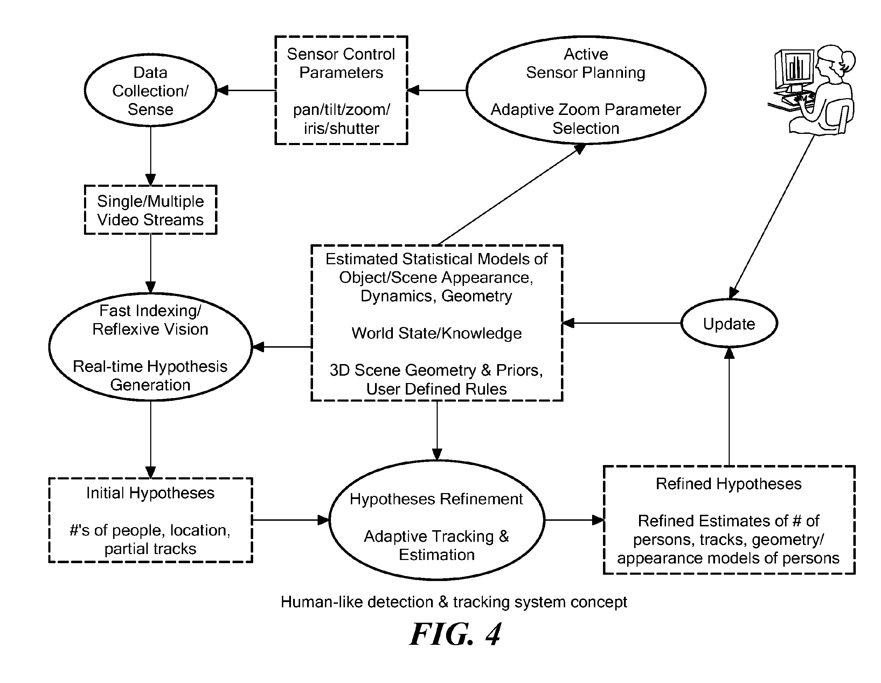

The architecture is illustrated in FIG. 4. Please note that it has close parallels to the dual-system model of cognition devised by eminent psychologist Daniel Kahneman [see D. Kahneman and S. Frederick, Representativeness revisited: Attribute substitution in intuitive judgement. In T.Gilovich, D. Griffin, & D. Kahneman (Eds.), Heuristics and biases: The psychology of intuitive judgment (pp. 49-81). Cambridge: Cambridge University Press, 2002]. Thus, in Step 102 the video system generates single/multiple video streams that are collected. In Step 104 fast indexing/reflexive vision data, i.e., real time hypothesis generation) is processed by the computer system to generate an initial hypothesis (e.g., i.e., the number of people in the scene, their locations in the scene, partial tracks, etc.). It is noted that this step104 uses "world state" data (e.g., 3D scene geometry and priors, user defined rules, etc.). Next, the adaptive tracking and estimation to generate refine estimators of the number of persons being tracked, the geometry and appearance models of the people being tracked, Step 106. The generated models are then used for discriminative tracking by the video system using context driven adaptive detection and tracking processing 108. During the discriminative tracking, the objects location and attributes are updated using online uncertainty estimation 110. It is noted that the refined hypothesis (Step 106) is used to update the "world state", which may also be updated by the user. This updated "world state" is used in Step 108 to adaptively change the video system (e.g., adaptive zoom parameter selection, etc.)

Referring again to FIG. 1, the uncertainty estimates are utilized to derive predictive distributions of expected locations of persons in the subsequent frame and will enable the derivation of occlusion hypotheses that will be fed back to adaptive decisions on feature representations useful for robust tracking.

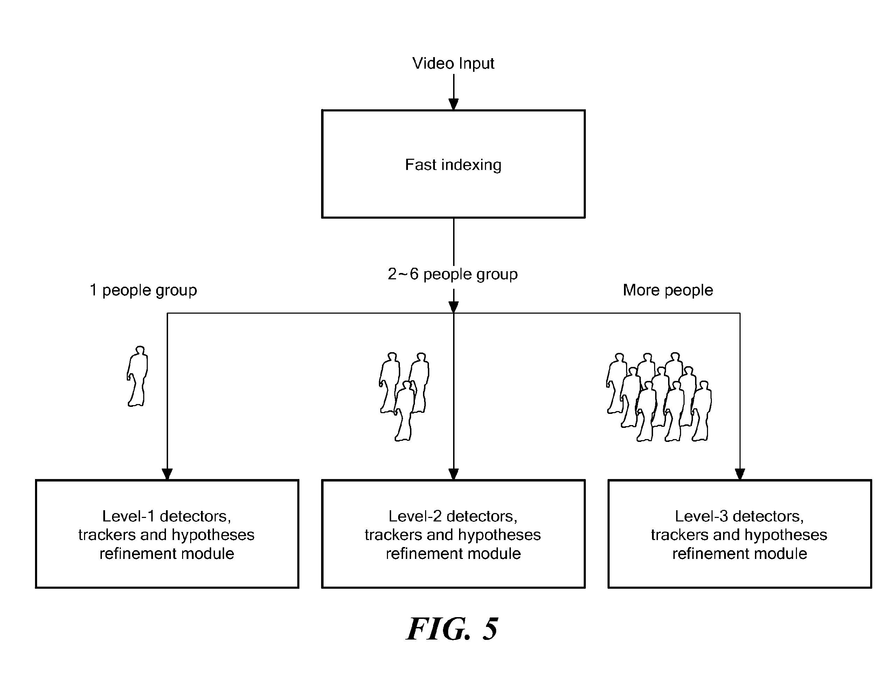

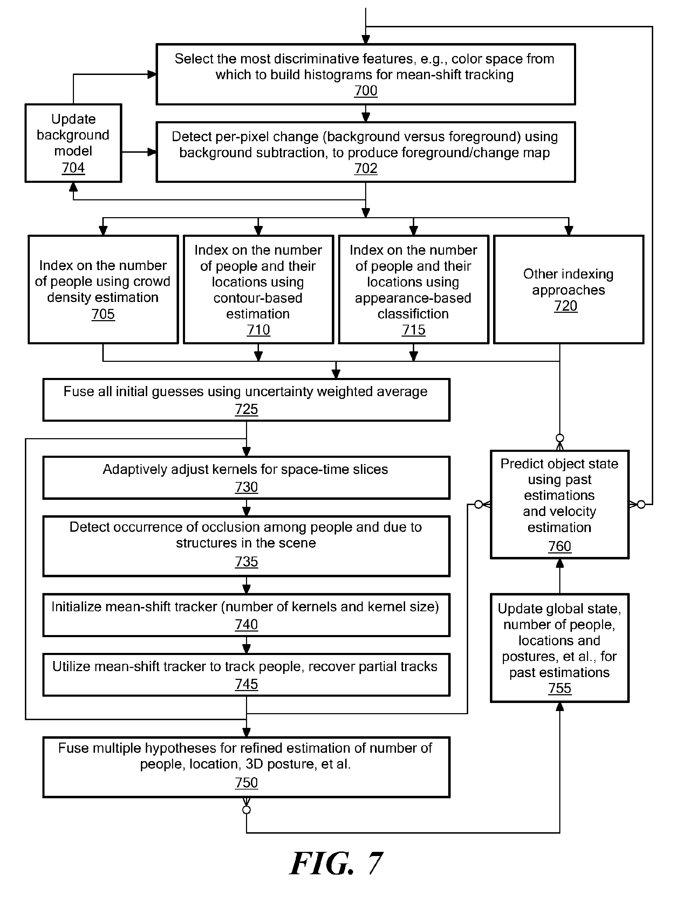

*The fast indexing step* is illustrated below in FIGS. 5 and 7. To address user-directed continuous tracking and logging, the user selects an object to be tracked in a semi-autonomous mode. In addition, the user is able to specify the criteria for objects to be tracked via the use of a rule-based policy engine.

## Fast Indexing (Step 104)

Fast indexing is an efficient algorithm that quickly calculates the number of people in a region of interest (ROI) in an input video frame. In the example in FIG. 5, ROIs are classified into those containing a single person (level-1), small groups of people (2~6 people, level-2) and large groups (>6 people, level-3). The basic principle of shape-based indexing [see L. Dong, V. Parameswaran, V. Ramesh, I. Zoghlami: Fast Crowd Segmentation Using Shape Indexing, ICCV 2007] is to quickly map the contour of the group of people into the number of pedestrians. The algorithm uses discrete Fourier transform (DFT) on the 50 uniformly sampled points on the contour. Magnitudes of the DFT coefficients are used as indices to retrieve the number of people (and candidate configurations) in a blob (In our context, a *blob* is a connected image region corresponding to a group of foreground objects, *e.g.*, people, and it is usually computed using a background subtraction algorithm. The outer boundary of the blob corresponds to the aforementioned contour.) using a *k*-nearest neighbor (*k-NN*) approach.

Referring to FIG. 7 based on knowledge about the background appearance and predicted locations of objects using previously estimated object locations and velocities, the algorithm adaptively select the most discriminative features for tracking, Step 700. In one embodiment, such discriminative features include the color space from which an appearance model is derived from [R. Collins and Y. Liu: On-Line Selection of Discriminative Tracking Features, ICCV'03]. In another embodiment, the most discriminative separating boundaries between a foreground object and surrounding structures are adaptively updated using an online learning and update approach [S. Avidan: Ensemble Tracking, IEEE Transactions on Pattern Analysis and Machine Intelligence (PAMI), Vol. 29(2), pp 261-271, 2007], that is selecting _subsets of spatiotemporal filter responses selected by a discriminative learning method. Next, the fast indexing process detects a pixelwise change map (foreground object versus background) Step 702. Next, utilizing the change map, the fast indexing process makes initial estimates by indexing the number of people in the frame using crowd density estimation (Step 705) or by indexing on the number of people and their locations using contour-based estimation (Step 710) or by indexing on the number of people and their locations using appearance-based classification (Step 715) or by other features that correlate with number of people. (Step 720).

Next, the process fuses all initial estimates using uncertainty weighted average (Step 725). Note that less certain guesses are weighted less and the update weights are computed *a priori*. The weights are stored as a look up table conditioning on the imaging conditions such as foreground/background color contrast and resolution. Next, the process adaptively adjusts kernel sizes for space-time slices (Step 730). Next the process detects the occurrence of occlusion among people and due to structures in the scene (Step 735), by using inference on the space-time slices. Next, the process initializes a mean-shift tracker, determining the number of kernels and kernel size and location based on walking direction of a person (a pedestrian walking parallel to the camera will need a more detailed model (thus more kernels) than a pedestrian walking toward or away from the camera due to larger range of swaying arms/legs apparent in the video frames), amount of occlusion (legs of a person should not be used for tracking if they are occluded) (Step 740). Next, the process utilizes the mean-shift tracker to track people, using the set of kernels determined in Step 740 and features determined in Step 700, and recover partial tracks (Step 745). Next, the process fuses multiple hypotheses for a refined estimation of number of people, location, 3D posture, et al. (Step 750), using fused partial tracks estimated by the fast indexing schemes (Step 725), partial tracks provided by the mean-shift tracker, and partial tracks predicted by the motion prediction process (Step 760), Next the process updates a global state, number of people, locations, and postures, et al., for past estimations (Step 755). Next, the process predicts object state using past estimations and velocity estimation (Step 760)

It is noted that the change detection map is used to derive the approximate number of people along with uncertainty in user specified zones (see U. S. Patent No. 7457436 patent by Paragios et al., "Real-time crowd density estimation from video") (Step 705). Further, the approximate number of people and their locations in (Step 710) can be further estimated through the procedure outlined in criterion [see L. Dong, V. Parameswaran, V. Ramesh, I. Zoghlami: Fast Crowd Segmentation Using Shape Indexing, ICCV 2007] and [United States Patent, Dong et al. Fast Crowd Segmentation Using Shape Indexing, U.S. Patent Application Publication No. 2009/0034793, assigned to the same assignee as the present invention, the entire subject matter thereof being incorporated herein by reference] if the estimated number of people along with uncertainty in a given zone is less than 6. Other alternative schemes may be used to estimate the number of people and their locations (for example: an appearance based head detection scheme may give a rough order of magnitude of number of people along with uncertainty in a given region). ( Step 720).

Reference is also made to U. S. Provisional Patent Application Serial No. 61/107,707 filed October 23, 2008 entitled "A General-View, Self-Calibrating Crowd-Size Estimator" inventors Vasudev Parameswaran and Visvanathan Ramesh, the entire subject matter thereof being incorporated herein by reference. As described therein:

It is assumed that (1) the scene is static, (2) the camera's height above the ground is greater than the maximum height of a human, (3) a background maintenance and change detection module supplies a binary change detection image C as input to our crowd size estimator, (4) the size of humans as a function of pixel position (i.e. partial scene geometry) is provided. These are reasonable assumptions in a typical surveillance scenario. For the purposes of exposition, we make two simplifications: (1) that humans can be modeled as rectangles (the method can be extended in a straightforward manner to work with more detailed models of humans), (2) vertical lines in the 3D world project to vertical lines in the image (the general case can be derived in a similar manner). Denote the width by $w(y)$ and height by $h(y)$. We work with the *y-axis* pointing downwards as in an image. Let the width and height of the image be W and H respectively. We propose that the crowd size $S$ can be expressed as a weighted area of $C$:

$$(1) \qquad S = \sum_{i=1}^{H} \sum_{j=1}^{W} \theta(i) C(i, j)$$

Here $S$ is a cumulative guess of the number of people in a scene, utilizing a weighted sum of partial evidences provided by each foreground pixel in the change detection image (change map) $C$. $S$ is subsequently called a score. N. Paragios and V. Ramesh. "A MRF-based approach for real-time subway monitoring. "Proc. IEEE CVPR, 2001 choose $\theta(i) = 1/( w(i)h(i))$. Although this is approximately position invariant and a reasonable weight function, in this work, we derive a weight function that incorporates position invariance explicitly. Assume that there is one person in the scene such that the rectangle modeling the person has its top left corner at $(x,y)$. In this case we seek a function $\theta$ (.) such that:

$$(2) \qquad \sum_{i=y}^{f(y)} \theta(i) \sum_{j=x}^{w(f(y))} C(i, j) = 1$$

Here $f(y)$ is the $y$ coordinate of the person's foot $f(y) - y = h(f(y))$. Let the $y$ coordinate of the horizon be $y_v$ which can be obtained by solving $h(y) = 0$. The smallest $y$ coordinate for a person's head we consider is given by :

$$(3) \qquad \mathbf{y}_0 = \mathbf{max}(0, \mathbf{y}_v + \varepsilon)$$

Let $y_{max}$ be the maximal head position above which the feet are below the image. Equation (2) applies for positions $y_0 \le y \le y_{max}$. For $y > y_{max}$ the weighted sum is adjusted to the fraction of the visible height of the person. We thus have (H= $y_0$ + 1) equations in as many unknowns and the linear system of equations can be solved to yield $\theta(.)$. Although this is in principle correct, the equations do not enforce smoothness of $\theta(y)$ and hence the resulting weight function is not typically smooth. We could remedy this problem using regularization (e.g. Tikhonov regularization, or ridge regularization) but we found the following method quite effective in our case. We first define the cumulative sum function

$$(4) \qquad F(y) = \sum_{t=y_0}^{f(y)} \theta(t)$$

Hence, equation (2) can be written as

$$(5) \qquad F(f(y)) = F(y) + \frac{1}{w(f(y))}$$

This is a recurrence relation in $F$. We arbitrarily set $F(H) = 1$ and obtain $F$ at sparse locations: $y = \{H, H - h(H),..., y_0\}$. Next we interpolate F using a cubic spline and finally obtain as follows:

$$(6) \qquad \theta(y) = F(y) - F(y - 1)$$

Denote the true number of people in a scene as $N$. For $N > 1$, $S$ obtained using the weight function above will exactly equal N if the people do not occlude each other. However, if there are occlusions, $S$ will not be unique, but can be described by a probability distribution function (PDF) $P(S | N)$. The entropy of $P(S | N)$ will depend upon the camera angle and be lowest for a top-down view. We estimate this PDF by simulating $N$ humans in various configurations and degrees of overlap and calculating $S$ using the resulting binary image and the scene-specific weight function we calculated in section 3. Note that this process allows the inclusion of more detailed human body models and specific perturbation processes to the binary image. For example, if the sensor noise characteristics are available we could incorporate them into the simulation process. Similarly, structured perturbations such as shadows and reflections can also be introduced into the simulation process, allowing the scaling up to more complex viewing conditions. The essential output of the simulation process is an estimate . Let the maximum number of people in the scene be $N_{max.}$ The simulation process produces $P(S|i), 1 \le i \le N_{max}$. At runtime, Bayes rule is used to find the posterior:

$$(7) \qquad P(N|S) = \frac{P(S|N)P(N)}{\sum\limits_{i=1}^{N_{max}} P(S|i)P(i)}$$

We further reduce the computational burden at run time by storing the posterior (rather than the likelihood) in a look up table. Hence, all that needs to be done at runtime is the calculation of $S$ and a lookup into the table to obtain $P(N|S)$. We also approximate $P(N|S)$ as a normal distribution and simply store the mean and standard deviation in the table. This has been found to work quite well in practice.

These guesses of number of people can be combined in a sequential (the application of the algorithms may follow one another depending on the accuracy of the estimation known *a priori*) or a parallel fusion scheme that weight the guessed results where the weights are related to the uncertainties. Location information is fused in similar manner. (Step 725)

This estimated number of persons may be combined with predictive information from the past state of the global tracker which gives the prior distribution of number of people and their locations in the scene. (Steps 755, 760)

For each object hypotheses, space-time projections are computed with kernels that are chosen as function of object hypotheses and their locations as described in U. S patent Application Publication No. 2008/0100473 entitled "Spatial-temporal Image Analysis in Vehicle Detection Systems" inventors Gao et al. published May 1, 2008 assigned to the same assignee as the present invention, the entire subject matter thereof being incorporated herein by reference. (Step 730)

The space time projections are used to diagnose occlusion states (occluded versus not-occluded) so that they can provide evidence to the mean-shift tracker for termination of tracks. (Step 735)

Given the object hypotheses and their locations, kernels for tracking the object hypotheses are adapted so that their likelihood of tracking will be maximized. (Step 740)

Mean-shift trackers [D. Comaniciu, V. Ramesh, P. Meer: Read-Time Tracking of Non-Rigid Objects Using Mean Shift. CVPR 2000: 2142-2149 (*Best Paper Award,* D. Comaniciu, V. Ramesh, P. Meer: The Variable Bandwidth Mean Shift and Data-Driven Scale Selection. ICCV 2001: 438-445, V. Parameswaran, V. Ramesh, I. Zoghlami: Tunable Kernels for Tracking. CVPR (2) 2006: 2179-2186, also US Patent Application Publication No, 2007/0183630, *Tunable kernels for tracking*, with inventors V. Parameswaran, V. Ramesh and I. Zoghlami, assigned to the same assignee as the present invention, the entire subject matter thereof being incorporated herein by reference] are initialized whose histograms are constructed by using the adaptive kernels. The histogram feature space will be adaptively constructed based on the most discriminative color space that discriminates the object from the neighboring objects and the background. (Step 745)

Partial tracks of objects along with their histograms and past locations are estimated and maintained in a tracking hypotheses list. When occlusion is predicted for a given object ID, the mean shift tracker is suspended. Re-initialization of the track is done by a search process that looks for a match of the object histogram based on the distribution of predicted location of the occluded object. (Step 750)

Object locations, appearance attributes, and partial tracks of objects are fused (using a multiple hypotheses tracking and fusion framework) with the predictions from the past. (Steps 755,760)

The estimates can be improved through use of multiple cameras via head position estimation (through triangulation) when the objects are in mid to close range.

Furthermore, posture analysis techniques can be used to estimate 3D gait and posture and improve the choice of kernels for tracking.

### Intelligent Vision System (VS) as a Specific Case of Our Systems Engineering Framework

Here, the method used three steps: a *fast indexing step* to estimate hypotheses for person (group) locations and attributes, a *context driven adaptive detection and tracking step* that refines these hypotheses, builds (or refines) statistical models of appearance, geometry of persons being tracked and utilizes these models for discriminative tracking, and an *online uncertainty estimation* step for person locations and attributes. The uncertainty estimates are utilized to derive predictive distributions of expected locations of persons in the subsequent frame and will enable the derivation of occlusion hypotheses that will be fed back to adaptive decisions on feature representations useful for robust tracking. The fast indexing step is illustrated in FIG. 5.

The advantages of using such a fast indexing (divide-and-conquer) approach include: 1) by spending a small amount of computational power on easy cases, the overall system can perform most efficiently; 2) by focusing more computational power on more difficult cases, the system can achieve best accuracy; 3) Detectors and trackers can be tailored toward each specific case such that their overall performance can be more easily optimized; 4) Scenario dependent performance can be evaluated more accurately by theory and by experiments, thus providing a better understanding of the vision system performance bound under different conditions. Note that in the general scenarios, groups of pedestrians may split or merge thus making simpler or more difficult cases. When splitting or merging happens, the number of people in the new groups can be inferred from the original groups or the fast indexing algorithm can be called upon again.

## *Performance Evaluation*

An important tool for understanding and fine-tuning the detectors and trackers is performance characterization, *i.e.*, a mapping from the tuning parameters to the tracker/detector success rate [see V. Ramesh, R.M. Haralick: Random Perturbation Models and Performance Evaluation of Vision Algorithms. CVPR 1992: 521-27, V. Ramesh, Performance Characterization of Image Understanding Algorithms, Ph.D. Dissertation, University of Washington, Seattle, March 1995, M. Greiffenhagen, V. Ramesh, D. Comaniciu, H. Niemann: Statistical Modeling and Performance Characterization of a Real-Time Dual Camera Surveillance System. CVPR 2000: 2335-2342].

Here, recorded videos are used with ground-truth for performance characterization of pedestrian detection and tracking sub-modules at different levels of difficulties. An experimental protocol that describes the data collection process, systems analysis and performance measurement process is devised to evaluate system performance and empirically determine tuning parameters for detection and tracking sub-modules. For instance, we can gather data with various crowded settings, different illumination conditions (e.g. different times of day), object or group attributes with similar size, appearance (clothing), and facial features to effectively determine the limits of our tracking system. Quantitative results such as probability of correct tracking, duration of persistent tracks, as functions of the various factors will be used to guide fine tuning of each sub-module and fusion of these sub-systems. A systematic sampling of the possible space of videos is performed so that the behavior of the tracking system under various factors can validate as outlined in the Table I below:

**Table 1 Influencing factors and detection/tracking strategies**

| Factors influencing detection and tracking systems | Detection & Tracking Strategies |
|---|---|
| Environmental conditions:<br>Indoors: Piecewise Planar scenes, Partial external illumination<br>Outdoors: Piecewise planar scenes, sudden/drastic illumination changes, dynamics due to moving light sources, etc. | Scene priors involving object/scene geometry, object dynamics, and illumination dynamics are utilized to devise illumination invariant matching, background modeling and indexing strategies for object detection and crowd density estimation. (see for example N. Paragios, V. Ramesh, B., Stenger, F. Coetzee, *Real-time crowd density estimation from video*, US Patent 7139409 M. Greiffenhagen, V. Ramesh, D. Comaniciu, H. Niemann: Statistical Modeling and Performance Characterization of a Real-Time Dual Camera Surveillance System. CVPR 2000: 2335-2342, A. Monnet, A. Mittal, N. Paragios and V. Ramesh: Background Modeling and Subtraction of Dynamic Scenes. ICCV 2003: 1305-1312, A. Mittal, N. Paragios: Motion-Based Background Subtraction Using Adaptive Kernel Density Estimation. CVPR (2) 2004: 302-309, B. Xie, D. Comaniciu, V. Ramesh, M. Simon, T. E. Boult: Component Fusion for Face Detection in the Presence of Heteroscedastic Noise. DAGM-Symposium 2003, A. Mittal, V. Ramesh: An Intensity-augmented Ordinal Measure for Visual Correspondence. CVPR (1) 2006: 849-856, L. Dong, V. Parameswaran, V. Ramesh, I. Zoghlami: Fast Crowd Segmentation Using Shape Indexing, ICCV 2007 |
| Light traffic conditions, Persons Isolated with no overlap | Feature representation for person tracking - adaptive as a function of background to foreground contrasts. (See for example: R. Collins and Y. Liu: On-Line Selection of Discriminative Tracking Features, ICCV'03, S. Lim, L.S. Davis and A. Mittal: Task Scheduling in Large Camera Networks. ACCV (1) 2007: 397-407, S. Avidan: Ensemble Tracking, IEEE Transactions on Pattern Analysis and Machine Intelligence (PAMI), Vol. 29(2), pp 261-271, 2007 /). Representation - color or texture, stable with respect to articulations, pedestrian part based dynamics model for integrating spatial as well as photometric constraints. (See for example: [Com00, Par06]), Object size in the image will influence the type of representation that is necessary for robust tracking. |
| Moderate traffic density - Moderate occlusions between persons. | In addition to the above entries -<br><br>a) Bottom-up tracking strategies with tolerance to a certain degree of occlusion (e.g. via use of robust statistical measures for matching)<br><br>b) Use top-down predictions of inter-object and self occlusions using pedestrian model parameters (i.e. geometric and motion attributes) estimated along with uncertainties to devise discriminative feature selection and robust matching functions. |

(continued)

| Factors influencing detection and tracking systems | Detection & Tracking Strategies |
| --- | --- |
| Crowded settings - Significant occlusions between persons | Use crowd density estimates combined with specialized feature detectors for face, head/shoulder detection along with pedestrian models to provide hypotheses of person locations and directions of movement. Refine hypotheses to estimate crowd state and motion and feedback estimated state to predict occlusions to estimate online discriminate features and robust matching functions. In addition, use camera control to adaptively zoom in on objects when the predicted probability of correct tracking is lower than a given threshold, (i.e. the resolution is low and the features are not discriminative enough). |

In the following sections we will describe in more details our technical approach for each of the modules that are utilized in our proposed tracking framework.

### Fast Indexing

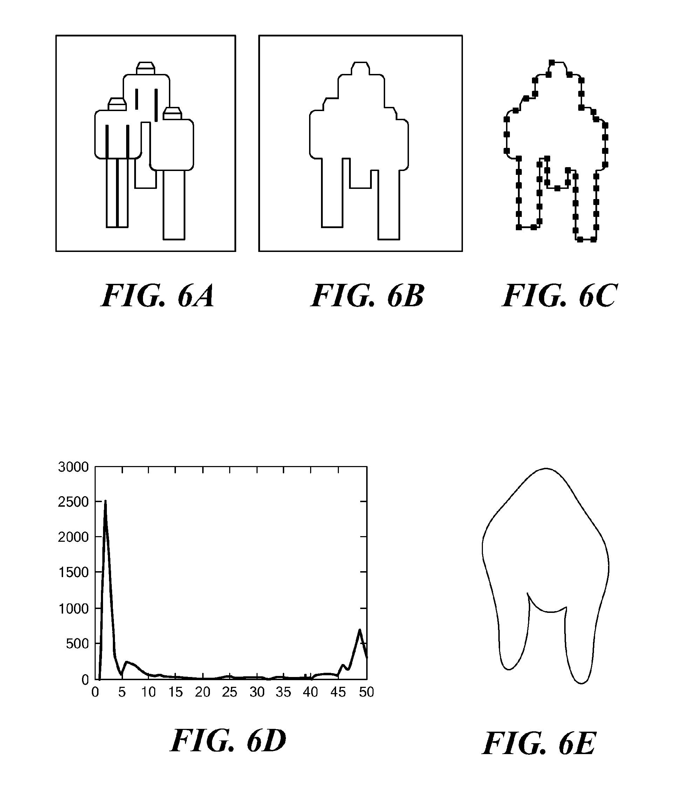

Fast indexing is an efficient algorithm that quickly calculates the number of people in a region of interest (ROI) in an input video frame. In the example in FIG. 5, ROIs are classified into those containing a single person (level-1), small groups of people (2~6 people, level-2) and large groups (>6 people, level-3). One embodiment of the indexing method is the shape-based indexing described in a paper by L. Dong, V. Parameswaran, V. Ramesh, I. Zoghlami entitled: Fast Crowd Segmentation Using Shape Indexing, ICCV 2007.
The basic principle is to quickly map the contour of the group of people into the number of pedestrians. The algorithm uses discrete Fourier transform (DFT) on the 50 uniformly sampled points on the contour. Magnitudes of the DFT coefficients are used as indices to retrieve the number of people (and candidate configurations) in a blob using a $k$-nearest neighbor ($k$-NN) approach.
Referring to FIG. 6, such FIG. 6 shows from input image to Fourier Descriptor (a) input image (b) foreground blob (c) sampling points on the boundary (d) magnitudes of Fourier Descriptor (e) reconstructed shape from 14 Fourier coefficients.

### Pedestrian Detection and Tracking

After indexing, sub-classes of more specific problems can be defined. Group size and other prior knowledge regarding the environment, e.g., scene geometry and camera configurations, are used to design a set of pedestrian detectors and trackers that perform best in each sub-problem.
For level-1 scenarios, a basic blob tracker is utilized that is based on a combination of mean-shift tracker [D. Comaniciu, V. Ramesh, P. Meer: Real-Time Tracking of Non-Rigid Objects Using Mean Shift. CVPR 2000: 2142-2149 (Best Paper Award, D. Comaniciu, V. Ramesh, P. Meer: The Variable Bandwidth Mean Shift and Data-Driven Scale Selection. ICCV 2001: 438-445, V. Parameswaran, V. Ramesh, I. Zoghlami: Tunable Kernels for Tracking. CVPR (2) 2006: 2179-2186] and the background-subtraction results, given the prior information that there is only one person in the blob.
In level-2 cases, we adopt algorithms described in [L. Dong, V. Parameswaran, V. Ramesh, I. Zoghlami: Fast Crowd Segmentation Using Shape Indexing, ICCV 2007, V. Parameswaran, V. Ramesh, I. Zoghlami: Tunable Kernels for Tracking. CVPR (2) 2006: 2179-2186]. The detection algorithm [L. Dong, V. Parameswaran, V. Ramesh, I. Zoghlami: Fast Crowd Segmentation Using Shape Indexing, ICCV 2007] involves two steps: 1) fast hypothesis generation using a discrete Fourier transform-based indexing method; 2) optimal people configuration searching using Markov-Chain Monte-Carlo (MCMC) sampling. A robust, real-time multiple pedestrian tracker is provided by 1) using advanced kernel methods [V. Parameswaran, V. Ramesh, I. Zoghlami: Tunable Kernels for Tracking. CVPR (2) 2006: 2179-2186]; 2) using occlusion reasoning of pedestrians inferred from the world state; the group of pedestrians are ordered from least to most likely to be occluded. Pedestrians that are less likely to be occluded will be tracked first. After they are tracked, more heavily occluded pedestrians are tracked using the configuration of tracked people and the possible occlusion introduced by them; 3) using the stereo cameras to track a pedestrian when he/she is covered by both cameras of the stereo system.
Solving the level-3 cases is a combination of utilizing active sensor planning, discriminative feature selection and optimal kernel weight calculation. In this case, a PTZ camera is actively involved in the detection/tracking process. The following steps are used for level-3 tracking and detection: 1) the overview camera detects entrance of crowd. 2) The PTZ camera is summoned to have a close-up view of the crowd. 3) A face detector [B. Xie, D. Comaniciu, V. Ramesh, M. Simon, T. E. Boult: Component Fusion for Face Detection in the Presence of Heteroscedastic Noise. DAGM-Symposium 2003, B. Xie, V. Ramesh, Y. Zhu, T. Boult: On Channel Reliability Measure Training for Multi-Camera Face Recognition. WACV 2007] or head/shoulder detector is used to detect the people in the scene. Detection results from multiple frames are combined for best accuracy. 4) A registration algorithm is used to match the PTZ view to the overview panorama. Utilizing the registration, the detected people and their locations can be transferred from the PTZ camera to the overview cameras. 5) The overview cameras track and book keep detected pedestrians. To track people in a crowd, the vision system must utilize prior scene geometry knowledge (camera calibration parameters, 3D scene models) and current world state to adaptively determine the best kernels and the most discriminative features for tracking.

***Resolving Ambiguities in Tracking Using Discriminative Feature Selection and Active Sensor Planning***

A pedestrian may dress in clothes that have similar colors to the background. This will be a difficult case for both the background subtraction algorithm and the mean shift tracker. It is necessary to select the right set of discriminative features for reliable tracking. Siemens will incorporate the most advanced discriminative trackers [S. Avidan: Ensemble Tracking, IEEE Transactions on Pattern Analysis and Machine Intelligence (PAMI), Vol. 29(2), pp 261-271, 2007, R. Collins and Y. Liu: On-Line Selection of Discriminative Tracking Features, ICCV'03, S. Lim, L.S. Davis and A. Mittal: Task Scheduling in Large Camera Networks. ACCV (1) 2007: 397-407] in this system.

People in a group may dress in similarly colored clothes. This case will cause tremendous difficulty for color-based trackers such as the mean-shift tracker. In order to track the group of people, we need to 1) find the most discriminative features for tracking. This can be achieved by using feature selection in the color space [R. Collins and Y. Liu: On-Line Selection of Discriminative Tracking Features, ICCV'03] or by using classification-based methods [S. Avidan: Ensemble Tracking, IEEE Transactions on Pattern Analysis and Machine Intelligence (PAMI), Vol. 29(2), pp 261-271, 2007, S. Lim, L.S. Davis and A. Mittal: Task Scheduling in Large Camera Networks. ACCV (1) 2007: 397-407]. If the ambiguities can be resolved by finer resolution images, an active sensor planning approach can be utilized; 2) use the dynamics and physical constraints of the group. There are certain physical rules that a group of pedestrians need to obey. For example, one pedestrian cannot interpenetrate another, and from frame to frame the acceleration and velocity of a pedestrian cannot change dramatically (in a matter of 33 milliseconds).

A number of embodiments of the invention have been described. Nevertheless, it will be understood that various modifications may be made without departing from the spirit and scope of the invention. Accordingly, other embodiments are within the scope of the following claims.

**Claims**

1.    A method for automatically detecting and tracking each one of a plurality of people in a scene, comprising:

   acquiring video frames from a video camera;
   extracting discriminative features distinguishing foreground from background in the acquired video frames;
   detecting changes in the extracted features to produce a change map;
   using the change map to generate a hypothesis for estimating an approximate number of people along with locations of the people and uncertainties therein; and
   using the estimates, initializing tracking for each one of the people to obtain partial tracks of each one of the people and using partial tracks to refine the estimate of the number of people, their individual locations and uncertainties.

2.    The method recited in claim 1 the generation of the hypothesis includes:

   (a) using the change map and/or the video frames to identify smaller hypotheses regions in the scene for further examination;
   (b) computing a summed-weighted score of occupancy of the identified smaller hypotheses regions;
   (c) using the score of occupancy to guess the number of people;
   (d) using contours for a plurality of identified smaller hypotheses regions to estimate another guess of the number of people and their locations for each smaller hypotheses regions; and
   (e) using an appearance based classifier that uses a plurality of appearance features integrated with a rule-based reasoning method to estimate number of people and their locations

3. The method recited in claim 1 wherein the discriminative features include histograms computed from discriminative color spaces or subsets of spatiotemporal filter responses selected by a discriminative learning method.

4. The method recited in claim 2 wherein the rule-based reasoning includes:

5. The method recited in claim 1 wherein the generation of the hypothesis includes:

(a) using the change map and/or the video frames to identify smaller hypotheses regions in the scene for further examination;
(b) computing a summed-weighted score of occupancy of the identified smaller hypotheses regions; and
(c) using the score of occupancy to guess the number of people.

6. The method recited in claim 1 wherein the generation of the hypothesis includes:

(a) using the change map and/or the video frames to identify smaller hypotheses regions in the scene for further examination;
(b) using contours for a plurality of identified smaller hypotheses regions to estimate another guess of the number of people and their locations for each smaller hypotheses regions.

7. The method recited in claim 1 wherein the generation of the hypothesis includes:

using an appearance based classifier that uses a plurality of appearance features integrated with a rule-based reasoning method to estimate number of people and their locations.

8. The method recited in claim 1 wherein the generation of the hypothesis includes:

(a) using the change map and/or the video frames to identify smaller hypotheses regions in the scene for further examination; and
(b) using an appearance based classifier that uses a plurality of appearance features integrated with a rule-based reasoning method to estimate number of people and their locations

9. A method for automatically detecting and tracking of each one of a plurality of people in a scene, comprising:

obtaining video data of the objects in the scene using a video system;
processing the data in computer apparatus using a indexing process to generate estimate hypotheses of the location and attributes of the objects within the scene;
using person track estimates from past frames to predict a likely locations of persons;
using the estimated hypotheses as input to construct space-time features used to detect self and mutual occlusion hypotheses;
using the occlusion hypotheses to initialize a plurality of mean-shift trackers whose histogram feature representation is chosen adaptively to discriminate between the given person and the rest of the scene and whose kernels are adaptively set according to the occlusion hypotheses and posture predictions.
obtaining a plurality of partial tracks using the plurality of mean-shift trackers that are robust under occlusions;
fusing the partial tracks along with person location predictions to obtain a refined estimate of number of people, their locations and postures.

10. The method recited in claim 9 including updating number of people, locations, postures, or past estimations.

11. The method recited in claim 9 including fusing all initial estimates using uncertainty weighted averages.

12. The method recited in claim 9 including detecting occurrences of occlusion among people and/or structures in the scene.

13. The method recited in claim 9 wherein the occlusion hypothesis is generated using space-time projections.

```
                              ┌─────────────┐
                              │    Start    │
                              └─────────────┘
                                     │
                                     ▼
    ┌──────────────────────────────────────────────────────────────┐
    │   Video System Is Provided Initial Settings in an Observed Scene │
    │   Having One or More Objects to be Tracked by the Video System  │
    │                            100                                  │
    └──────────────────────────────────────────────────────────────┘
```

Video System Is Provided Initial Settings in an Observed Scene Having One or More Objects to be Tracked by the Video System
100

Obtaining Video Data of the Objects in the Scene Using a Video System
102

Processing Obtained Video Data in Computer Apparatus (FIG. 2) Using a Fast-Indexing Process to Generate Estimate Hypothesis of the Location and Attributes of the Objects Within the Scene
104

Refining the Estimate Hypothesis to Generate Statistical Models of Appearance and Geometry of the Objects Being Tracked
106

Using the Generated Models for Discriminative Tracking by the Video System Using Context Driven Adaptive Detection and Tracking Processing
108

During the Discriminative Tracking, Updating the Objects Locations and Attributes Using Online Uncertainty Estimation
110

SEE FIG. 7

*FIG. 1*

**FIG. 2**

FIG. 3

Human-like detection & tracking system concept

*FIG. 4*

Video Input

Fast indexing

1 people group

2~6 people group

More people

Level-1 detectors, trackers and hypotheses refinement module

Level-2 detectors, trackers and hypotheses refinement module

Level-3 detectors, trackers and hypotheses refinement module

*FIG. 5*

**FIG. 6A**

**FIG. 6B**

**FIG. 6C**

**FIG. 6D**

**FIG. 6E**

Select the most discriminative features, e.g., color space from which to build histograms for mean-shift tracking
700

Update background model
704

Detect per-pixel change (background versus foreground) using background subtraction, to produce foreground/change map
702

Index on the number of people using crowd density estimation
705

Index on the number of people and their locations using contour-based estimation
710

Index on the number of people and their locations using appearance-based classifiction
715

Other indexing approaches
720

Fuse all initial guesses using uncertainty weighted average
725

Adaptively adjust kernels for space-time slices
730

Detect occurrence of occlusion among people and due to structures in the scene
735

Initialize mean-shift tracker (number of kernels and kernel size)
740

Utilize mean-shift tracker to track people, recover partial tracks
745

Predict object state using past estimations and velocity estimation
760

Update global state, number of people, locations and postures, et al., for past estimations
755

Fuse multiple hypotheses for refined estimation of number of people, location, 3D posture, et al.
750

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61058234 A
- US 61107707 A
- US 7006950 B, Greiffenhagen
- US 7457436 B
- US 20090034793 A
- US 20080100473 A
- US 20070183630 A
- US 7139409 B

### Non-patent literature cited in the description

- **L. Dong ; V. Parameswaran ; V. Ramesh ; I. Zoghlami.** Fast Crowd Segmentation Using Shape Indexing. *ICCV,* 2007
- **V. Parameswaran ; V. Ramesh ; I. Zoghlami.** Tunable Kernels for Tracking. *CVPR,* 2006, 2179-2186
- **M. Greiffenhagen ; V. Ramesh ; D. Comaniciu ; H. Niemann.** Statistical Modeling and Performance Characterization of a Real-Time Dual Camera Surveillance System. *CVPR,* 2000, 2335-2342
- Representativeness revisited: Attribute substitution in intuitive judgement. **D. Kahneman ; S. Frederick.** Heuristics and biases: The psychology of intuitive judgment. Cambridge University Press, 2002, 49-81
- **R. Collins ; Y. Liu.** On-Line Selection of Discriminative Tracking Features. *ICCV'03*
- **S. Avidan.** *Ensemble Tracking, IEEE Transactions on Pattern Analysis and Machine Intelligence (PAMI),* 2007, vol. 29 (2), 261-271
- **N. Paragios ; V. Ramesh.** A MRF-based approach for real-time subway monitoring. *Proc. IEEE CVPR,* 2001
- **D. Comaniciu ; V. Ramesh ; P. Meer.** Read-Time Tracking of Non-Rigid Objects Using Mean Shift. *CVPR,* 2000, 2142-2149
- **D. Comaniciu ; V. Ramesh ; P. Meer.** The Variable Bandwidth Mean Shift and Data-Driven Scale Selection. *ICCV,* 2001, 438-445
- **V. Ramesh ; R.M. Haralick.** Random Perturbation Models and Performance Evaluation of Vision Algorithms. *CVPR,* 1992, 521-27
- **V. Ramesh.** Performance Characterization of Image Understanding Algorithms. *Ph.D. Dissertation,* March 1995
- **M. Greiffenhagen ; V. Ramesh ; D. Comaniciu ; H. Niemann.** Statistical Modeling and Performance Characterization of a Real-Time Dual Camera Surveillance System. *CVPR,* 2000, 2335-2342
- **M. Greiffenhagen ; V. Ramesh ; H. Niemann.** Statistical Modeling and Performance Characterization of a Real-Time Dual Camera Surveillance System. *CVPR,* 2000, 2335-2342
- **A. Monnet ; A. Mittal ; N. Paragios ; V. Ramesh.** Background Modeling and Subtraction of Dynamic Scenes. *ICCV,* 2003, 1305-1312
- **A. Mittal ; N. Paragios.** Motion-Based Background Subtraction Using Adaptive Kernel Density Estimation. *CVPR,* 2004, 302-309
- **B. Xie ; D. Comaniciu ; V. Ramesh ; M. Simon ; T. E. Boult.** Component Fusion for Face Detection in the Presence of Heteroscedastic Noise. *DAGM-Symposium,* 2003
- **A. Mittal ; V. Ramesh.** An Intensity-augmented Ordinal Measure for Visual Correspondence. *CVPR,* 2006, 849-856
- **S. Lim ; L.S. Davis ; A. Mittal.** Task Scheduling in Large Camera Networks. *ACCV,* 2007, 397-407
- **S. Avidan.** Ensemble Tracking. *IEEE Transactions on Pattern Analysis and Machine Intelligence (PAMI),* 2007, vol. 29 (2), 261-271
- **D. Comaniciu ; V. Ramesh ; P. Meer.** Real-Time Tracking of Non-Rigid Objects Using Mean Shift. *CVPR,* 2000, 2142-2149
- **D. Comaniciu ; V. Ramesh ; P. Meer.** The Variable Bandwidth Mean Shift and Data-Driven Scale Selection. *ICCV,* 2001, 438-445
- **V. Parameswaran ; V. Ramesh ; I. Zoghlami.** Tunable Kernels for Tracking. *CVPR,* 2006, 2179-2186
- **B. Xie ; V. Ramesh ; Y. Zhu ; T. Boult.** On Channel Reliability Measure Training for Multi-Camera Face Recognition. *WACV,* 2007
- **S. Lim ; L.S. Davis ; A. Mittal.** Task Scheduling in Large Camera Networks. *ACCV,* 2007, 397-407